# EUROPEAN PATENT APPLICATION

(11) **EP 4 597 731 A1**
(43) Date of publication of application: **06.08.2025**
(21) Application number: 23871454.7
(22) Date of filing: 02.08.2023
(51) Int. Cl.: H01M 50/516, H01M 50/209, H01M 50/213, H01M 50/284, H01M 50/291, H01M 50/503, H01M 50/519, H01M 50/569

(54) **ELECTRIC DEVICE AND METHOD OF MANUFACTURING SAME**

(30) Priority: 26.09.2022 JP 2022153103
(71) Applicant: Panasonic Energy Co., Ltd., Osaka 570-8511 (JP)
(72) Inventor: NAKAGAWA, Yutaro, Kadoma-shi, Osaka 571-0057 (JP); ADACHI, Kazuki, Kadoma-shi, Osaka 571-0057 (JP)
(74) Representative: Novagraaf International SA
(86) International application number: PCT/JP2023/028289
(87) International publication number: WO 2024/070212

(57) **Abstract**

Spring back is suppressed with a simple configuration. An electric device includes lead plate 30 including bent segment 32 bent along bend line 31, circuit board 3 electrically connected to bent segment 32 of lead plate 30, and holder 20 that holds lead plate 30. Holder 20 includes holder portions 26 that lock part of upper surfaces of bent segments 32. Holder portion 26 is configured to abut on and hold the part of the upper surface of bent segment 32 while the holder portion opposes a direction of spring back caused by bent segment 32 of lead plate 30 being bent along bend line 31. Circuit board 3 includes connection region 4 electrically connected to lead plate 30. Bent segment 32 is electrically connected to connection region 4.

## Description

### TECHNICAL FIELD

The present disclosure relates to an electric device and a method of manufacturing the same.

### BACKGROUND ART

In an electric device such as a battery pack, lead plates are fixed by soldering, welding, or the like in order to obtain electrical connection in a manufacture process (for example, PTL 1). In such a manufacture process, the lead plates may be bent in an assembly process and then welded to a circuit board or soldered due to restrictions such as structure of each of components and an assembly method.

Here, when the lead plates are bent to specific positions, spring back occurs and the lead plates invariably try to return to original shapes thereof. When the spring back occurs, the lead plates and the circuit board might be separated from each other and no longer in close contact with each other, so that a welding defect or a solder defect occurs and an electrical connection defect, such as contact failure, is caused. For this reason, in order to reliably fix the lead plates at the bent positions and stably perform welding and soldering, it is conventionally necessary to provide a structure for suppressing the spring back and perform soldering in a completely fixed state.

As the structure for suppressing the spring back, for example, jigs or screws are used, that is, for example, the lead plates are fixed to the circuit board using a fixing mechanism such as screws. Such a configuration, however, has a problem that the number of components for fixing the lead plates to the circuit board increases and accordingly cost increases. In addition, Additionally, there was an issue with the limited design flexibility of the fixing mechanism.

### Citation List

### Patent Literature

PTL 1: Unexamined Japanese Patent Application Publication (Translation of PCT Application) No. 2014-514722

### SUMMARY OF THE INVENTION

### Technical problem

An object of the present disclosure is to provide an electric device that achieves suppression of spring back with a simple configuration and a method of manufacturing the electric device.

### Solutions to problem

An electric device according to an exemplary embodiment of the present disclosure includes a lead plate including a bent segment bent along a bend line, a circuit board electrically connected to the bent segment of the lead plate, and a holder that holds the lead plate, in which the holder includes a holder portion that locks part of an upper surface of the bent segment, the holder portion is configured to abut on and hold the part of the upper surface of the bent segment while the holder portion opposes a direction of spring back caused by the bent segment of the lead plate being bent along the bend line, the circuit board includes a connection region electrically connected to the lead plate, and the bent segment is electrically connected to the connection region.

In addition, a method of manufacturing an electric device according to another exemplary embodiment of the present disclosure is a method for manufacturing an electric device including a lead plate, a circuit board electrically connected to the lead plate, and a holder that holds the lead plate, the method including the steps of bending the lead plate, inserting a holder portion disposed on the electric device through a window opened in the lead plate, and causing the holder portion to abut on and hold part of periphery of the window of the lead plate; and connecting the lead plate to the circuit board through laser welding with the lead plate held by the holder portion.

### Advantageous effect of invention

With the electric device and the method of manufacturing the electric device according to an embodiment of the present disclosure, holder portions can suppress spring back generated when lead plates are bent, thereby increasing stability when the lead plates are fixed.

### BRIEF DESCRIPTION OF THE DRAWINGS

[FIG. 1] FIG. 1 is a perspective view of a battery pack according to a first exemplary embodiment.
[FIG. 2] FIG. 2 is an exploded perspective view of the battery pack of FIG. 1.
[FIG. 3] FIG. 3 is an exploded perspective view of a battery module of FIG. 2.
[FIG. 4] FIG. 4 is an enlarged view of a main part of the battery module of FIG. 2.
[FIG. 5] FIG. 5 is an enlarged view of a main part illustrating a state before the battery module of FIG. 4 is assembled.
[FIG. 6] FIG. 6 is an enlarged perspective view of the battery module of FIG. 5 as viewed from a different angle.
[FIG. 7] FIG. 7 is an enlarged perspective view illustrating a bent lead plate of the battery module of FIG. 6.
[FIG. 8] FIG. 8 is a cross-sectional view of FIG. 7.
[FIG. 9] FIG. 9A is an enlarged cross-sectional view of a main part illustrating a lead plate fixing structure of a battery pack according to a second exemplary embodiment. FIG 9B is a plan view of the lead plate fixing structure of FIG. 9A.
[FIG. 10] FIG. 10A is an enlarged cross-sectional view of a main part illustrating a lead plate fixing structure of a battery pack according to a third exemplary embodiment. FIG 10B is a plan view of the lead plate fixing structure of FIG. 10A.
[FIG. 11] FIG. 11A is an enlarged cross-sectional view of a main part illustrating a lead plate fixing structure of a battery pack according to a fourth exemplary embodiment. FIG 11B is a plan view of the lead plate fixing structure of FIG. 11A.

### DESCRIPTION OF EMBODIMENT

Exemplary embodiments of the present disclosure may also be specified by the following configurations and features.

In an electric device according to another exemplary embodiment of the present disclosure, in the above exemplary embodiment, the lead plate includes a window penetrating through the lead plate, and the holder portion is configured to abut on and hold part of periphery of the window while the holder portion opposes a direction of spring back in the bent segment while being inserted through the window of the lead plate. With this configuration, by inserting the holder portion through the window and causing the holder portion to abut on the upper surface of the bent segment, it is possible to suppress the spring back of the lead plate and increase stability when the lead plate is fixed.

In an electric device according to yet another exemplary embodiment of the present disclosure, in any one of the above exemplary embodiment, the lead plate includes, on part of a lower surface of the bent segment, a laser welding region that is laser-welded to the connection region. With the above configuration, it is possible to achieve an advantage that the holder portion can suppress generation of a gap between the lead plate and the connection region during the laser welding and reliability of the laser welding can be improved.

In an electric device according to still another exemplary embodiment of the present disclosure, in any one of the above exemplary embodiments, the holder portion has a claw shape.

In an electric device according to still another exemplary embodiment of the present disclosure, in any one of the above exemplary embodiments, the lead plate includes a flat spring at an end edge of the window and at a position facing the holder portion. With the above configuration, it is possible to achieve an advantage that repulsive force of a contact surface with the holder portion is increased by pressing force of the lead spring, and the lead plate is more reliably pressed toward the circuit board to improve the reliability.

In an electric device according to still another exemplary embodiment of the present disclosure, in any one of the above exemplary embodiments, the holder portion has a columnar shape, the window of the lead plate has a hole shape through which the holder portion is inserted, and a tip of the holder portion is crushed to press periphery of the hole-shaped window with the columnar holder portion inserted through the window. With the above configuration, the lead plate can be pressed with a simple configuration of crushing the tip of the holder portion.

In an electric device according to still another exemplary embodiment of the present disclosure, in any one of the above exemplary embodiments, the holder portion has a columnar shape, the window of the lead plate has a circular shape through which the holder portion is inserted, and a tip of the columnar holder portion is crushed to press periphery of the window with the columnar holder portion inserted through the window.

In an electric device according to still another exemplary embodiment of the present disclosure, in any one of the above exemplary embodiments, the holder portion is integrally molded with the holder.

The electric device according to still another exemplary embodiment of the present disclosure further includes, in any one of the above exemplary embodiments, one or more secondary battery cells connected to the circuit board via the lead plate, in which the holder includes the holder portion in a region where the holder holds periphery of the circuit board, and the electric device is a battery pack. With the above configuration, by providing the holder with the holder portion, the lead plate can be stably held and connected to the circuit board without separately preparing a fixing mechanism for holding the lead plate.

In an electric device according to still another exemplary embodiment of the present disclosure, in any one of the above exemplary embodiments, the lead plate includes steps on each side surfaces of the lead plate in plan view, the holder portion is provided for each of the steps of the lead plate, and each holder portion includes a lock that locks an upper surface of a corresponding step among the steps.

An electric device according to still another exemplary embodiment of the present disclosure includes a bent lead plate, a circuit board electrically connected to the lead plate, and a holder that holds the lead plate, in which the lead plate includes a window penetrating through the lead plate, and the holder includes a holder portion that abuts on and holds part of periphery of the window while the holder portion opposes a direction of spring back against the bending of the lead plate while being inserted through the window of the lead plate.

Exemplary embodiments of the present disclosure will be described hereinafter with reference to the drawings. The exemplary embodiments described hereinafter, however, are examples for embodying the technical idea of the present disclosure, and the present disclosure is not limited to the exemplary embodiments described hereinafter. In addition, the present specification never limits members described in the claims to members according to the exemplary embodiments. In particular, dimensions, materials, shapes, relative arrangement, and the like of components described in the exemplary embodiments are not intended to limit the scope of the present disclosure thereto unless otherwise specified, and are merely illustrative examples. Note that sizes, positional relationships, and the like of members illustrated in each drawing might be exaggerated for clarity of description. Furthermore, in the following description, the same names and reference signs indicate the same or similar members, and detailed description is appropriately omitted. Furthermore, with respect to elements constituting the present disclosure, a plurality of elements may be formed of the same member and the member may serve as the plurality of elements, and conversely, functions of one member may be shared and implemented by a plurality of members.

As an electric device in the present disclosure, an electric device including a circuit board that comes with lead plates fixed thereto, and a holder that holds the circuit board can be used. Examples of the electric device include battery packs including one or more secondary battery cells and battery-driven devices incorporating secondary battery cells, such as cellular phones, smartphones, cameras, and wireless devices. Here, an example of application of a battery pack will be described as an example of the electric device.

The battery pack can be used as a power source for driving an assist bicycle, a power source for driving a transportation device for home delivery or a golf course, such as an electric cart or an electric scooter. In addition, the battery pack can also be used as a power source for driving a vehicle such as a construction machine, a hybrid vehicle, or an electric automobile. Furthermore, the battery pack can also be used as a power source for a portable electric device such as an electric cleaner, a cleaning robot, an electric tool, or a wireless device. Alternatively, the battery pack can be used as a backup power source for a server or a power source device for home use, business use, or factory use in a stationary power storage application. As an exemplary embodiment of the present disclosure, a battery pack used as a power source for driving an assist bicycle will be described hereinafter as an example.

### [First exemplary embodiment]

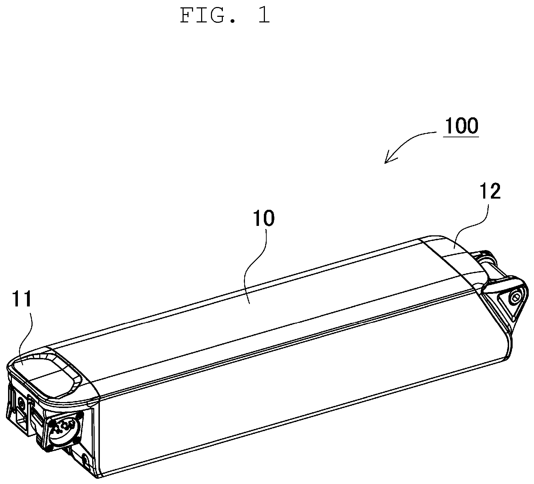

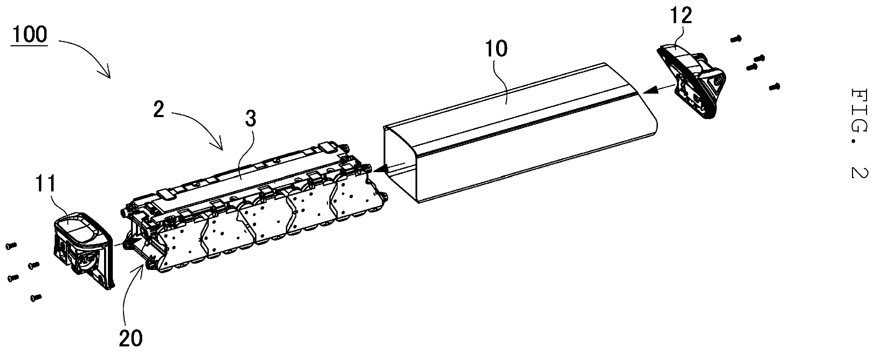

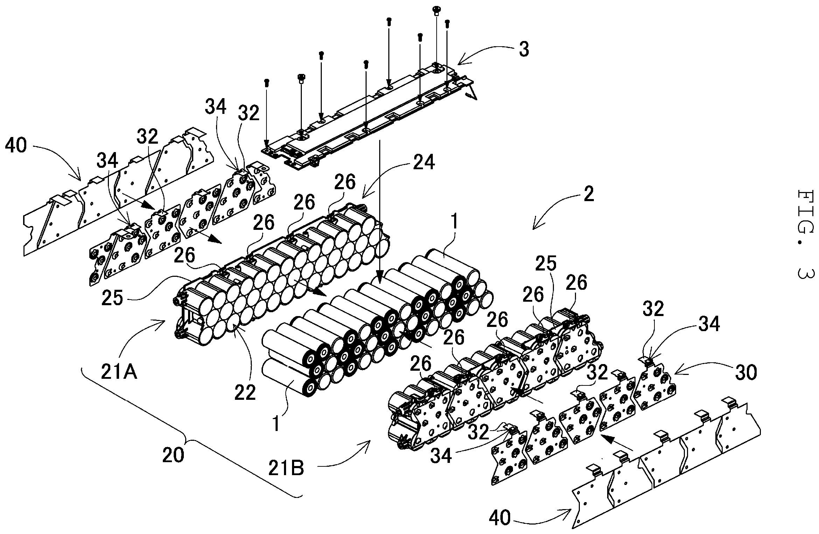

Figs. 1 to 3 illustrate battery pack 100 according to a first exemplary embodiment of the present disclosure. In these drawings, Fig. 1 is a perspective view of battery pack 100 according to the first exemplary embodiment, Fig. 2 is an exploded perspective view of battery pack 100 in Fig. 1, and Fig. 3 is an exploded perspective view of battery module 2 in Fig. 2. Battery pack 100 illustrated in these drawings includes an exterior case 10, battery module 2, and circuit board 3. Battery module 2 includes one or more secondary battery cells 1 and holder 20 that holds secondary battery cells 1. In addition, each secondary battery cell 1 is connected to circuit board 3 via lead plates 30.

### (Exterior case 10)

Exterior case 10 houses one or more secondary battery cells 1 and holder 20. As illustrated in Figs. 1 and 2 and other drawings, exterior case 10 has a box-like appearance. Exterior case 10 has a tubular shape having open ends in a longitudinal direction thereof. The opening ends are closed by lids 11, 12, respectively. Note that the exterior case is not limited to this configuration, and may be divided, for example, into an upper case and a lower case. Exterior case 10 may be made of a metal having excellent rigidity and heat dissipation, or may be made of a lightweight resin having excellent insulation, namely, for example, polycarbonate, a PC-ABS alloy, or the like. As illustrated in Fig. 2, a housing space for housing battery module 2 is provided inside exterior case 10.

### (Secondary battery cells 1)

As one or more secondary battery cells 1, secondary battery cells whose exterior can is cylindrical or rectangle can be used. In examples of Figs. 2 and 3, cylindrical secondary battery cells are used. Each secondary battery cell 1 has positive and negative electrodes. The positive and negative electrodes are preferably provided on end surfaces of each secondary battery cell 1. A known secondary battery such as a lithium ion secondary battery, a nickel-metal hydride battery, or a nickel-cadmium battery can be appropriately used as each secondary battery cell 1.

### (Holder 20)

The plurality of secondary battery cells 1 is housed in holder 20. Holder 20 includes a plurality of housing cylinders 22 that individually house secondary battery cells 1. In the example of Fig. 3, holder 20 is divided into two parts in a horizontal direction, and cylindrical secondary battery cells 1 in a horizontal position are housed in divided cases 21A, 21B of housing cylinder 22 from both sides. Holder 20 may be made of a resin such as polycarbonate having excellent insulation.

### (Lead plates 30)

Lead plates 30 are disposed on a side surface of holder 20. Lead plates 30 connect electrodes on end surfaces of secondary battery cells 1 to one another to connect secondary battery cells 1 in series or in parallel with one another. In the examples of Figs. 2 and 3 and other drawings, secondary battery cells 1 are connected to one another in ten-series and four-parallel arrangement. Note that the number and arrangement of the secondary battery cells, the number of series and parallel connections, and the like are not limited to this example, and any number and arrangement can be appropriately employed.

Lead plates 30 are made of metal plates having excellent conductivity, such as nickel or aluminum. In addition, insulating plates 40 are disposed on an end surface of lead plates 30. Insulating plates 40 are made of a material having excellent insulation, such as paper or polycarbonate.

In addition, as illustrated in the exploded perspective view of Fig. 3, circuit board 3 is disposed on an upper surface of holder 20. Holder 20 holds secondary battery cells 1 and circuit board 3. Battery module 2 is connected to circuit board 3 via lead plates 30. Mounting surface 24 for mounting circuit board 3 is disposed on the upper surface of holder 20 constituting battery module 2.

### (Circuit board 3)

On circuit board 3, a charge and discharge circuit for charging and discharging secondary battery cells 1, a protection circuit for monitoring voltage and temperature of secondary battery cell 1 and stopping currents at a time of abnormality, and the like are mounted. Circuit board 3 is composed of a glass epoxy board or the like.

### (Bent segments 32)

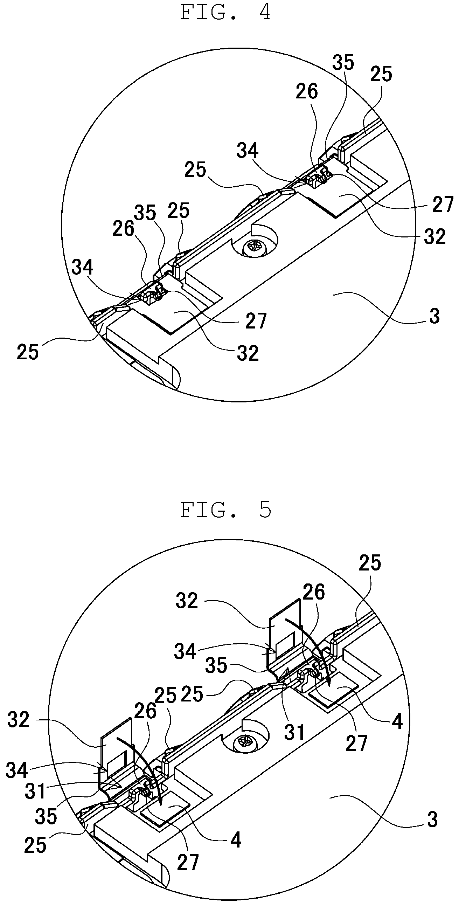

Lead plates 30 have, as parts thereof, bent segments 32 bent along bend lines 31. In the examples of Figs. 3 and 4 and other drawings, bent segments 32 are provided on lead plates 30. Lead plates 30 are electrically connected to circuit board 3 via these bent segments 32.

### (Holder portions 26)

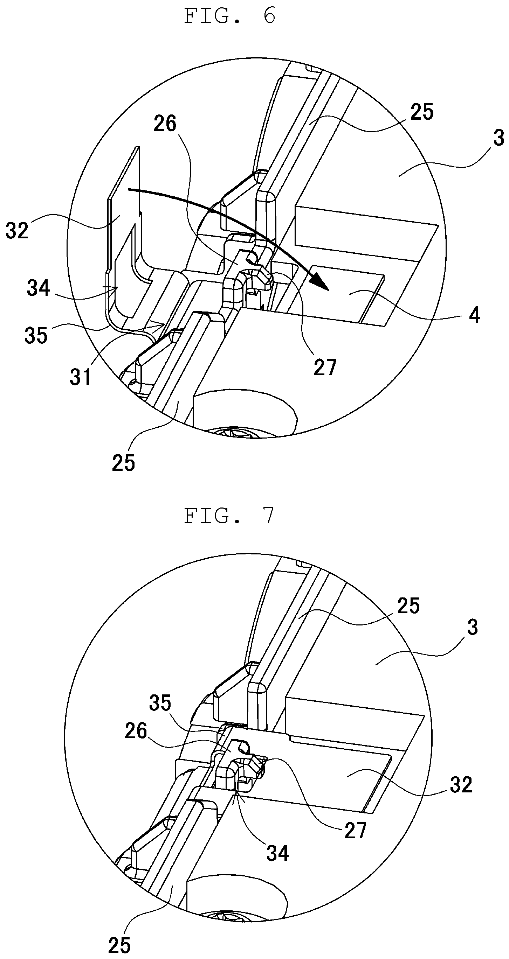

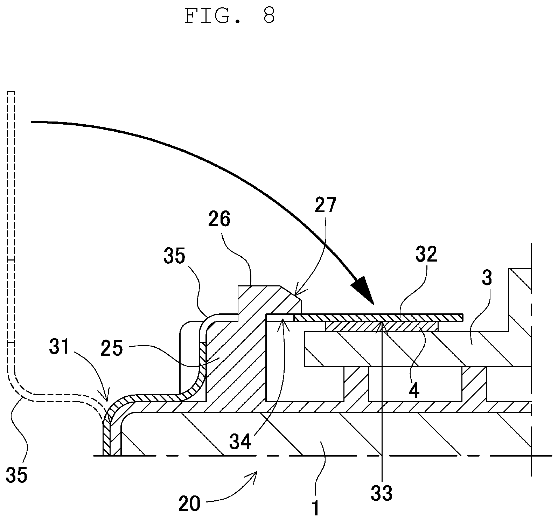

Holder 20 includes holder portions 26 that lock part of upper surfaces of bent segments 32. Holder portions 26 are configured to abut on and hold part of the upper surfaces of bent segments 32 while the holder portion opposes a direction of spring back caused by bent segments 32 of lead plates 30 being bent along bend lines 31. With this configuration, holder portions 26 can suppress the spring back generated when lead plates 30 are bent, thereby increasing stability at a time of fixing lead plates 30. This situation will be described based on Figs. 4 to 8. In these drawings, Fig. 4 is an enlarged view of a main part of battery module 2 of Fig. 2, Fig. 5 is an enlarged view of a main part of battery module 2 of Fig. 4 before assembly, Fig. 6 is an enlarged perspective view of battery module 2 of Fig. 5 as viewed from a different angle, Fig. 7 is an enlarged perspective view illustrating bent lead plate 30 of battery module 2 of Fig. 6, and Fig. 8 is a cross-sectional view of Fig. 7.

When upper ends of lead plates 30 fixed to the end surface of secondary battery cells 1 are fixed to connection regions 4 provided on circuit board 3, first, as illustrated in Fig. 5, circuit board 3 is mounted on mounting surface 24 of holder 20 without the upper ends of lead plates 30 bent. This is because, if lead plates 30 are bent in advance, the mounting of circuit board 3 is hindered. Thereafter, as illustrated in Fig. 4, bent segments 32 at the upper ends of lead plates 30 are bent and welded while being in contact with connection regions 4 of circuit board 3. In particular, during these years, laser welding is suitably used for connection of lead plates 30 from a viewpoint of solderless connection.

Even when metal lead plates 30 are bent as illustrated in Fig. 7 from a state where bent segments 32 are upright as illustrated in Fig. 6, however, there is a concern that bent segments 32 try to return to original states and rise as a result of spring back, resulting in generation of gaps between lead plates 30 and connection regions 4. When a gap is generated, reliability of laser welding is impaired. Since it is conventionally necessary to provide a fixing mechanism such as screws to press bent segments 32 against connection regions 4, there is a problem that the configuration becomes complicated and time and effort are required.

In battery pack 100 according to the present exemplary embodiment, on the other hand, the fixing mechanism for preventing rising of bent segments 32 is added to holder 20, so that it is not necessary to separately prepare the fixing mechanism. Specifically, as illustrated in Figs. 6, 7, and 8 and other drawings, holder portions 26 are disposed at ends of holder 20 in regions that hold periphery of circuit board 3.

### (Windows 34)

In this example, windows 34 penetrating lead plates 30 are disposed. In addition, holder portions 26 are configured to abut on and hold part of periphery of windows 34 while the holder portion opposes directions of spring back in bent segments 32 while being inserted through windows 34 of lead plates 30. With this configuration, by inserting holder portions 26 through windows 34 and causing holder portions 26 to abut on the upper surfaces of bent segments 32, it is possible to suppress the spring back of lead plates 30 and increase the stability when lead plates 30 are fixed.

Holder portion 26 is provided for each lead plate 30 on mounting surface 24 of holder 20 along a side surface of circuit board 3 in a longitudinal direction. In example of Figs. 4 to 8, holder 20 has walls 25 of bank shapes covering the end surfaces of circuit board 3 on both sides of mounting surface 24. Holder portions 26 are integrally formed on upper surfaces of walls 25.

In addition, holder portions 26 have claw shapes. As illustrated in Fig. 8, inclined surface 27 is disposed on an upper surface of each claw shape to make it easier for window 34 of bent segment 32 to pass holder portion 26 from above, and after the claw shape passes through window 34, a bottom surface of the claw shape abuts on and holds an upper surface of a peripheral edge of window 34. With this configuration, holder portions 26 can easily pass through windows 34, and are hardly removed after the passing.

In the examples of Figs. 5 to 7, windows 34 are opened in such a way as to overlap second bend lines 35 obtained by bending lead plates 30 in accordance with outer shapes of holder 20. Windows 34 are opened at positions where holder portions 26 can be inserted when bent segments 32 are bent.

Lead plates 30 and connection regions 4 are laser-welded while being in contact with each other using holder portions 26. As illustrated in Fig. 8, part of lower surfaces of bent segments 32 of lead plates 30 includes laser welding regions 33 to be laser-welded to connection regions 4. Holder portions 26 thus suppress generation of gaps between lead plates 30 and connection regions 4 to improve reliability of laser welding.

### (Method of Manufacturing Electric Device)

Here, a method of manufacturing an electric device including lead plates 30, circuit board 3, and holder 20 will be described. First, lead plates 30 are bent, holder portions 26 disposed on the electric device are inserted through windows 34 opened in lead plates 30, and holder portions 26 abut on and hold part of the periphery of windows 34 of lead plates 30. Lead plates 30 are then connected to circuit board 3 through laser welding with lead plates 30 held by holder portions 26. Holder portions 26 can thus suppress the spring back generated when lead plates 30 are bent, and stability at the time of fixing can be increased.

### [Second exemplary embodiment]

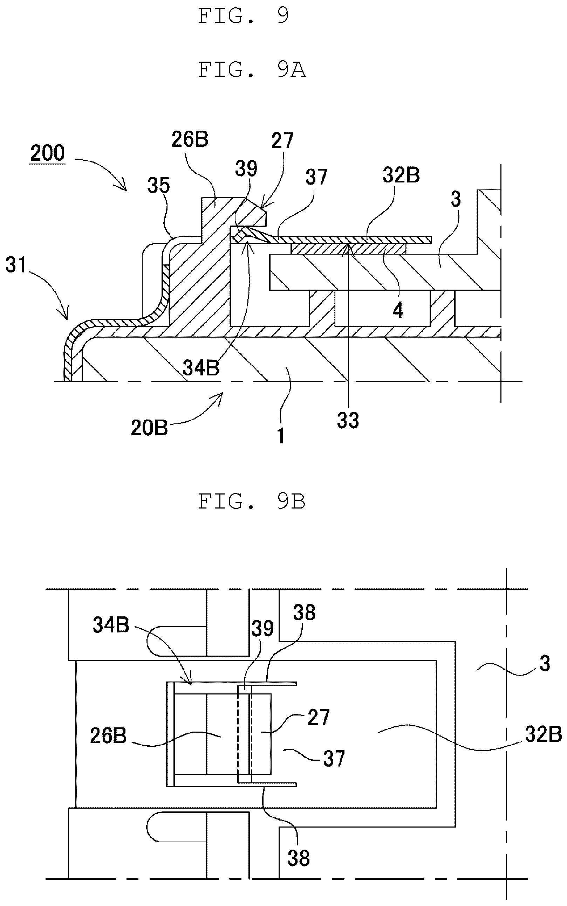

The configuration for pressing bent segments 32 against connection regions 4 using holder portions 26 is not limited to the above, and other exemplary embodiments may be appropriately employed. For example, a configuration for increasing pressing force may also be added to a window side. Figs. 9A and 9B illustrate such an example as battery pack 200 according to a second exemplary embodiment. In these drawings, the same members as those in the above-described first exemplary embodiment are given the same reference numerals, and detailed description thereof is appropriately omitted.

In battery pack 200 according to the second exemplary embodiment, as illustrated in a cross-sectional view of Fig. 9A and a plan view of Fig. 9B, flat spring 37 is disposed at an end edge of window 34B of each of bent segments 32B in such a way as to face holder portion 26B. Flat spring 37 is configured by forming cut 38 obtained by extending a pair of sides (upper and lower sides in Fig. 9B) of rectangular window 34 that is not engaged with holder portion 26. Holder portions 26B provided in holder 20B, on the other hand, have claw shapes as in the first exemplary embodiment.

In addition, protrusion 39 protruding with respect to holder portion 26 may be provided at an end edge of each flat spring 37. In the example illustrated in the cross-sectional view of Fig. 9A, the end edge of flat spring 37 engaged with holder portion 26 is folded in a mountain shape to form protrusion 39. By adding protrusion 39, it is possible to avoid generation of a gap or floating between window 34 and holder portion 26, and reliably bring bent segment 32 into contact with connection region 4 to improve reliability. In addition, by increasing repulsive force of a contact surface with holder portion 26 with pressing force of flat spring 37, lead plate 30 can be more reliably pressed toward circuit board 3.

### [Third exemplary embodiment]

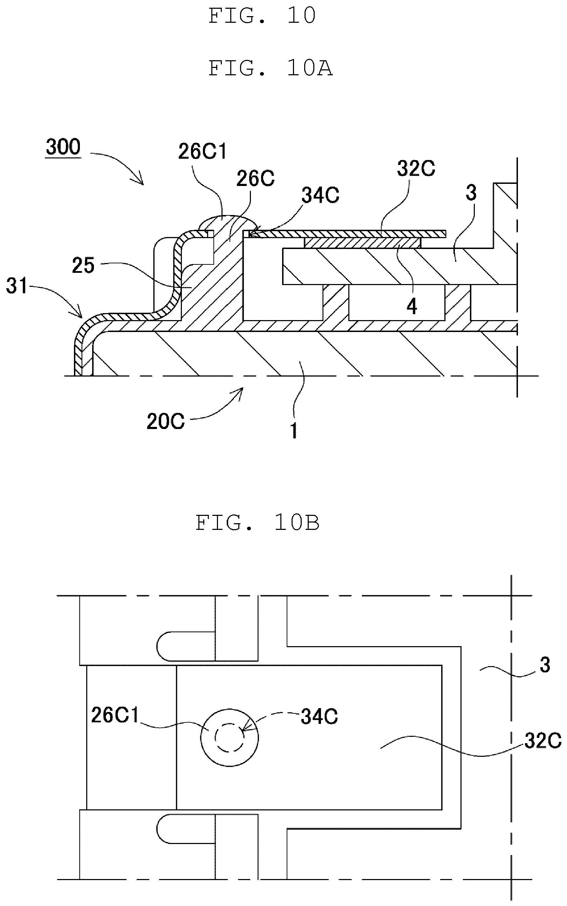

The holder portions are not limited to the claw shapes, and may have pin shapes. For example, the holder portions may have columnar shapes, and the windows may have hole shapes so that the columnar holder portions can be inserted. Tips of the columnar holder portions are then crushed to press periphery of the hole-shaped windows with the columnar holder portions inserted through the hole-shaped windows. The lead plates can be pressed even with such a simple configuration where the tips of the columnar holder portions are crushed. Figs. 10A and 10B illustrate such an example as battery pack 300 according to a third exemplary embodiment. In these drawings, too, the same members as those in the above-described first exemplary embodiment and the like are given the same reference numerals, and detailed description thereof is appropriately omitted.

In an example of Fig. 10A, each of holder portions 26C provided for holder 20C has a columnar shape, and window 34C opened in bent segment 32C has a circular shape having an inner diameter slightly larger than an outer diameter of columnar holder portion 26C. With columnar holder portion 26C inserted though circular window 34C, a tip of holder portion 26C is pressed by a heated iron plate or the like to be crushed and spreads into a shape of flange 26C1. As a result, flange 26C1 disposed on an upper surface of holder portion 26 presses periphery of circular window portion 34C, and bent segment 32C can be brought into contact with connection region 4.

In addition, although a configuration where one holder portion is provided for each lead plate and pressed against a connection region has been described in the above example, the present disclosure is not limited to this configuration, and a plurality of holder portions may be provided for each lead portion and pressed against a connection region, instead.

Furthermore, in the above example, a configuration where windows 34 are provided in bent segments 32 and holder portions 26 are locked or engaged with windows 34 to press bent segments 32 against connection regions 4 has been described. The present disclosure, however, is not limited to this configuration, and the bent segments may be held by being locked or engaged with the holder portions without providing the windows, instead.

### [Fourth exemplary embodiment]

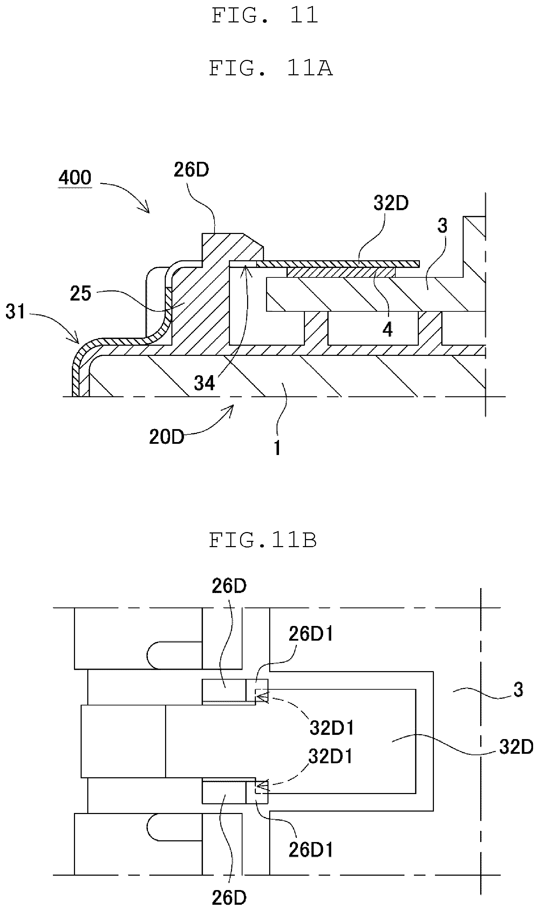

As an example of a configuration where the bent segments are pressed against the connection regions without providing the windows, a cross-sectional view of Fig. 11A and a plan view of Fig. 11B illustrate battery pack 400 according to a fourth exemplary embodiment. In these drawings, too, the same members as those in the above-described first exemplary embodiment are given the same reference numerals, and detailed description thereof is appropriately omitted. In this example, steps 32D1 are disposed on side surfaces of bent segment 32D of each lead plate in plan view. In addition, holder portions 26 are provided on holder 20 in such a way as to face steps 32D1 on both side surfaces of bent segment 32D. Each holder portion 26 includes lock 26D1 that locks an upper surface of corresponding step 32D1. Accordingly, left and right steps 32D1 of bent segment 32D are locked by corresponding holder portions 26, and bent segment 32D can be brought into contact with connection region 4. With this configuration, since it is not necessary to form windows in bent segments 32D, area of bent segments 32D can be increased to reduce electric resistance.

Furthermore, in the above configuration, holder 20 that holds secondary battery cells 1 and circuit board 3 includes holder portions 26. As a result, a mechanism for holding lead plates 30 can be added using existing members while changing part of shapes of the existing members without separately preparing member for providing holder portions 26.

Note that holder 20 includes holder portions 26 that hold lead plates 30 in the above example, the holder portions might be provided in other members, instead. For example, holder members may be provided for a dedicated battery holder that holds secondary battery cells or a dedicated board holder that holds a circuit board. In addition, dedicated members for providing holder members may be added.

The present disclosure is not limited to direct connection between the lead plates and the connection regions of the circuit board, and can also be applied to a configuration where connection regions for electrically connecting lead plates through welding or the like are provided in connection members different from the circuit board and the lead plates are connected to the circuit board via the connection regions of the connection member.

Furthermore, the present disclosure is not limited to the regions where the lead plates and the circuit board are connected to each other, and can also be applied to an application where lead plates are electrically connected to other members through laser welding or the like. For example, lead plates and a case may be connected to each other, lead plates may be connected to each other, or lead plates and bus bars may be connected to each other.

In the above example, the battery pack is attached to the electric device to be driven, and power is supplied to the electric device. When remaining capacity of the battery pack is low or the battery pack deteriorates over time, the battery pack can be replaced and the electric device can be continuously used. The present disclosure, however, does not limit the battery pack to a replaceable battery pack mainly housing secondary battery cells, and can also be applied to a mode where secondary battery cells are housed in a housing of an electric device. In the present disclosure, a battery pack is only required to house secondary battery cells in a case thereof, and a battery pack including secondary battery cells for driving in a housing of an electric device itself is also referred to as a battery pack. That is, the present disclosure is not limited to a replaceable battery pack, and can also be applied to an electric device incorporating secondary battery cells.

### INDUSTRIAL APPLICABILITY

The battery pack according to the present disclosure can be suitably used as a power source device for a transportation body such as an assist bicycle or an electric cart. In addition, the battery pack according to the present disclosure can be appropriately used for applications such as power sources of wireless devices and power sources of portable electric devices such as electric cleaners and electric tools.

### REFERENCE MARKS IN THE DRAWINGS

100, 200, 300, 400 battery pack
1 secondary battery cell
2 battery module
3 circuit board
4 connection region
10 exterior case
11, 12 lid
20 holder
21A, 21B divided case
22 housing cylinder
24 mounting surface
25 wall
26, 26B, 26C, 26D holder portion
26C1 flange
26D1 lock
27 inclined surface
30 lead plate
31 bend line
32, 32B, 32C, 32D bent segment
32D1 step
33 laser welding region
34, 34B, 34C window
35 second bend line
37 flat spring
38 cut
39 protrusion
40 insulating plate

## Claims

1. An electric device comprising:
a lead plate including a bent segment bent along a bend line;
a circuit board electrically connected to the bent segment of the lead plate; and
a holder that holds the lead plate,
wherein the holder includes a holder portion that locks part of an upper surface of the bent segment,
the holder portion is configured to abut on and hold the part of the upper surface of the bent segment while the holder portion opposes a direction of spring back caused by the bent segment of the lead plate being bent along the bend line,
the circuit board includes a connection region electrically connected to the lead plate, and
the bent segment is electrically connected to the connection region.

2. The electric device according to Claim 1,
wherein the lead plate includes a window penetrating through the lead plate, and the holder portion is configured to abut on and hold part of periphery of the window while the holder portion opposes the direction of spring back in the bent segment while being inserted through the window of the lead plate.

3. The electric device according to Claim 1,
wherein the lead plate includes, on part of a lower surface of the bent segment, a laser welding region that is laser-welded to the connection region.

4. The electric device according to Claim 2,
wherein the holder portion has a claw shape.

5. The electric device according to Claim 2,
wherein the lead plate includes a flat spring at an end edge of the window and at a position facing the holder portion.

6. The electric device according to Claim 2,
wherein the holder portion has a columnar shape,
the window of the lead plate has a hole shape through which the holder portion is inserted, and
a tip of the holder portion is crushed to press periphery of the window with the holder portion inserted through the window.

7. The electric device according to Claim 6,
wherein the holder portion has a columnar shape,
the window of the lead plate has a circular shape through which the holder portion is inserted, and
a tip of the holder portion is crushed to press periphery of the circular window with the holder portion inserted through the window.

8. The electric device according to Claim 1,
wherein the holder portion is integrally molded with the holder.

9. The electric device according to any one of Claims 1 to 8, further comprising:
one or more secondary battery cells connected to the circuit board via the lead plate,
wherein the holder includes the holder portion in a region where the holder holds periphery of the circuit board, and
the electric device is a battery pack.

10. The electric device according to Claim 1,
wherein the lead plate includes steps on each side surfaces of the lead plate in plan view,
the holder portion is provided for each of the steps of the lead plate, and
the holder portion includes a lock that locks an upper surface of a corresponding step among the steps.

11. An electric device comprising:
a lead plate that is partially bent;
a circuit board electrically connected to the lead plate; and
a holder that holds the lead plate,
wherein the lead plate includes a window penetrating through the lead plate, and
the holder includes a holder portion that abuts on and holds part of periphery of the window while the holder portion opposes a direction of spring back against the bending of the lead plate while being inserted through the window of the lead plate.

12. A method of manufacturing an electric device including a lead plate, a circuit board electrically connected to the lead plate, and a holder that holds the lead plate, the method comprising the steps of:
bending the lead plate, inserting a holder portion disposed on the electric device through a window opened in the lead plate, and causing the holder portion to abut on and hold part of periphery of the window of the lead plate; and
connecting the lead plate to the circuit board through laser welding with the lead plate held by the holder portion.
